(19) **Europäisches Patentamt**
**European Patent Office**
**Office européen des brevets**

(11) **EP 3 492 281 B1**

(12) **EUROPEAN PATENT SPECIFICATION**

(45) Date of publication and mention
of the grant of the patent:
**21.10.2020 Bulletin 2020/43**

(51) Int Cl.:
***B60C 11/03*** *(2006.01)*

(21) Application number: **18206701.7**

(22) Date of filing: **16.11.2018**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2017 JP 2017231952**
 **06.08.2018 JP 2018147717**

(43) Date of publication of application:
**05.06.2019 Bulletin 2019/23**

(73) Proprietor: **SUMITOMO RUBBER INDUSTRIES,
LTD.
Kobe-shi,
Hyogo-ken 651-0072 (JP)**

(72) Inventors:
 • **SASAKI, Tatsuya**
 **Kobe-shi Hyogo 651-0072 (JP)**
 • **UEDA, Emi**
 **Kobe-shi Hyogo 651-0072 (JP)**

 • **TANAKA, Masatoshi**
 **Kobe-shi Hyogo 651-0072 (JP)**
 • **MIYAZAWA, Ken**
 **Kobe-shi Hyogo 651-0072 (JP)**
 • **OGIHARA, Sawa**
 **Kobe-shi Hyogo 651-0072 (JP)**
 • **SANAE, Ryuhei**
 **Kobe-shi Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
 **EP-A1- 0 542 493     EP-A1- 2 272 687
 JP-A- 2000 177 320     US-A- 3 926 238
 US-A- 5 383 506**

## Description

### Technical field

The present invention relates to a tire provided in the tread portion with a tread pattern in which a tread design unit is repeatedly arranged in the tire circumferential direction.

### Background art

There have been proposed various tread patterns for tires according to conditions of vehicles, road surfaces and the like on which the tires are used.

Most vehicle tires are provided with tread patterns formed by arranging repeatedly and circumferentially of the tire a pattern unit comprising grooves and blocks.

In such a tire, if the pattern unit is repeated at the same pitches, in other words, the circumferentially arranged pattern units have the same circumferential length, unpleasant noise so called "pitch noise" occurs,

Japanese Patent Application Publication No. 2000-177320 (Patent Document 1) discloses a tire in which, in order to reduced pitch noise, amplitude P(k) of k-th order (k=1 to n) obtained by Fourier transforming the undermentioned pulse train is limited within a predetermined range, wherein

on the premise of the tread patter comprising a series of tread design units arranged circumferentially of the tire with variable pitches and thereby the tread design units have variable lengths,

the pulse train is defined by viewing the tread design units as pulses, and arranging the pulses at variable intervals accord with the above-mentioned variable pitches.

Thereby, in the tire disclosed in Patent Document 1, amplitudes of peaks of the pitch noise can be equalized over a wide frequency range to turn to white noise, and the pitch noise can be reduced.

A tire in accordance with the preamble of claim 1 is known from document JP 2000 177320 A.

### Summary of the invention

### Problems to be solved by the invention

Although the pitch noise of the tire disclosed in Patent Document 1 can be reduced, there is a problem that noise during running is liable to cause beat noise.

It is therefore, an object of the present invention to provide a tire capable of suppressing the beat noise during running.

According to the present invention, a tire comprises:

a tread portion provided with a tread pattern,
the tread pattern comprising a series of a number N of tread design units arranged repeatedly and circumferentially of the tire in a sequence,
the tread design units having at least two different circumferential lengths, wherein
when
viewing the tread design units as the number N of pulses having magnitudes proportional to the respective circumferential lengths of the tread design units, and
defining a pulse train such that the number N of the pulses are arranged in the same sequence as the tread design units at intervals which are defined by the circumferential lengths of the corresponding tread design units expressed in term of a ratio to one of the above-said at least two different circumferential lengths, and further
expressing magnitudes of the pulses by the respective circumferential lengths in term of a ratio to the median value of the above-said at least two different circumferential lengths,
the average of the magnitudes of the pulses corresponding to the above-said at least two different circumferential lengths is limited to 1.00,
a maximum value Fmax of amplitude F(k) of k-th order (k = 1 to 2N) of frequencies obtained by Fourier transforming the above-said pulse train with the following formula (1) is limited to satisfy the following condition: Fmax <= 4.52 - 0.0125 N,

$$F(k) = \frac{10}{k^2}\sqrt{c_k^2 + d_k^2}$$

$$c_k = \sum_{j=1}^{N} p(j) \cdot \sin\left(\frac{2\pi k}{l} \cdot X(j)\right) \qquad --- \quad (1)$$

$$d_k = \sum_{j=1}^{N} p(j) \cdot \cos\left(\frac{2\pi k}{l} \cdot X(j)\right)$$

wherein

$P(j)$ is the magnitude of the j-th pulse (j = 1 to N) counted from a beginning of the pulse train,
$x(j)$ is the position of the j-th pulse from the beginning of the pulse train, and 1 is a circumference length parameter equal to the sum of the above-said ratios expressing the circumferential lengths of all the tread design units in a series, and

the amplitudes $F(k)$ and $F(k+1)$ of every two of the adjacent orders (k) and (k+1) are limited so as not to satisfy a condition that both of the amplitudes $F(k)$ and $F(k+1)$ have values of 2/3 or more times the above-said maximum value Fmax.

Further, the tire according to the present invention may have the following features:

the amplitudes $F(k)$ of every two of the adjacent orders (k) and (k+1) are limited so as to have values of not more than 2/3 times the above-said maximum value Fmax;
the amplitude $F(1)$ of the 1st order is not more than 0.6;
the amplitude $F(1)$ of the 1st order is not more than 0.5;
the number N of the tread design units in a series is not less than 30 and not more than 90 (30 <= N <=90);
the increasing rate of the circumferential lengths of every two of the tread design units arranged adjacently to each other in the tire circumferential direction is a range from 0.08 to 0.25;
the maximum value Fmax is not more than 4.37 - 0.0125 N;
the maximum value Fmax is not more than 4.22 - 0.0125 N.

## Brief description of the drawings

Fig. 1 is a developed partial view of a tread portion of a tire showing a conceptional example of the tread pattern.
Fig. 2 is a diagram showing a pulse train for obtaining the amplitude $F(k)$.
Fig. 3 is a graph showing a relationship between the amplitude $F(k)$ and the order k.
Figs. 4-13 are graphs showing relationships between amplitude $F(k)$ and order k of tires A-J, respectively.

## Description of the preferred embodiments

Embodiments of the present invention will now be described in detail with reference to the accompanying drawings.
The present invention can be applied to various vehicle tires including pneumatic tires, airless tire and solid tires.
The tire 1 according to the present invention comprises a tread portion 2 provided with a tread pattern 3.
The tread pattern 3 comprises a series of a number N of tread design units 4 repeatedly arranged circumferentially of the tire and having at least two different circumferential lengths L.
Thus, the tread design units 4 are arranged at variable pitches.
The number m of the different circumferential lengths L is two or more, and the upper limit therefor can be arbitrary determined according to conditions of vehicles, road surfaces and the like on which the tires are used.
But, preferably, the number m is set to be not more than 10. usually, the number m is set to 2, 3, 4, 5 or 6.

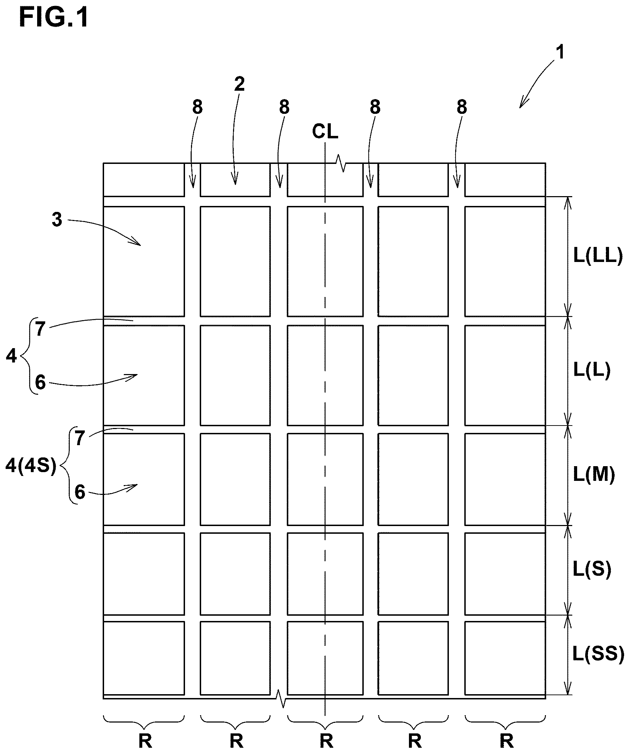

In Fig. 1 showing a part in the tire circumferential direction of a simplified example of the tread pattern 3, the number of the different circumferential lengths L is 5.
The tread pattern 3 may comprise two or more series of the repeatedly arranged tread design units 4.
In the example shown in Fig. 1, the tread pattern 3 is made up of five series of the repeatedly arranged tread design units 4. In the case of the tread pattern 3 comprising two or more series of the repeatedly arranged tread design units 4, the circumferential positions of the tread design units 4 in each series can be the same as those of the adjacent series as shown in Fig. 1, but they can be shifted from those of the adjacent series.

In the simplified example of the tread pattern 3 shown in Fig. 1, one tread design unit 4 is made up of one block 6 and one lateral groove 7 adjacent thereto in the tire circumferential direction, and
the tread pattern 3 is a block pattern in which the tread portion is divided into the blocks 6 by the lateral grooves 7 and main grooves 8 continuously extending in the tire circumferential direction intersecting the lateral grooves 7.

In this embodiments, the tread pattern 3 is a block pattern, but the present invention is not limited to block patterns. For example, the present invention can be applied to a tire provided with a tread pattern comprising a circumferentially continuously extending rib which is axially divided by a zigzag circumferential groove. In this case, the tread design units 4 are circumferential parts of the rib defined by the zigzag cycles of the zigzag circumferential groove, for example, between the same points such as between a valley and a valley and between a mountain and a mountain. In the case of the tread pattern 3 comprising lugs such as a lug pattern, by considering the lug as a block, the description of the blocks can be applied to the lugs.

The number N of the tread design units 4 repeatedly arranged in a series can be arbitrary determined. However, if the number N is decreased, there is a possibility that the noise reduction effect by the pitch variation can not be fully exhibited. On the other hand, if the number N is increased, uneven wear of the tread portion 2 becomes liable occur. Therefore, it is desirable that the number N is set in a range of not less than 30 and not more than 90 (30 =< N =< 90).

In order to increase the rigidity of the tread portion 2 per pitch to improve the steering stability, and also enhance the noise reduction effect, it is preferred that the number N is set in a range of not less than 30 and not more than 49 (30 =< N =< 49).

when the different circumferential lengths L of the tread design units 4 in a series are arrange in the order of magnitude, the ratio between the adjacent circumferential lengths may be arbitrary determined. However, if the ratio is large, the difference in rigidity between the adjacent tread design units 4 is liable to become large, and uneven wear is liable to occur. On the other hand, if the ratio is small, pitch noise concentrates in a narrow frequency range, and there is a possibility that the noise reduction effect by the pitch variation can not be fully exhibited.

From this viewpoint, the ratio (increasing rate) of the circumferential lengths L of every two of the tread design units 4 arranged adjacently to each other in the tire circumferential direction is preferably set in a range of about 0.08 to 0.25.

In Fig. 1 showing a part of a simplified example of the tread pattern 3, five series of the tread design units 4 are shown. In this example, the five tread design units 4 have five different circumferential lengths L.

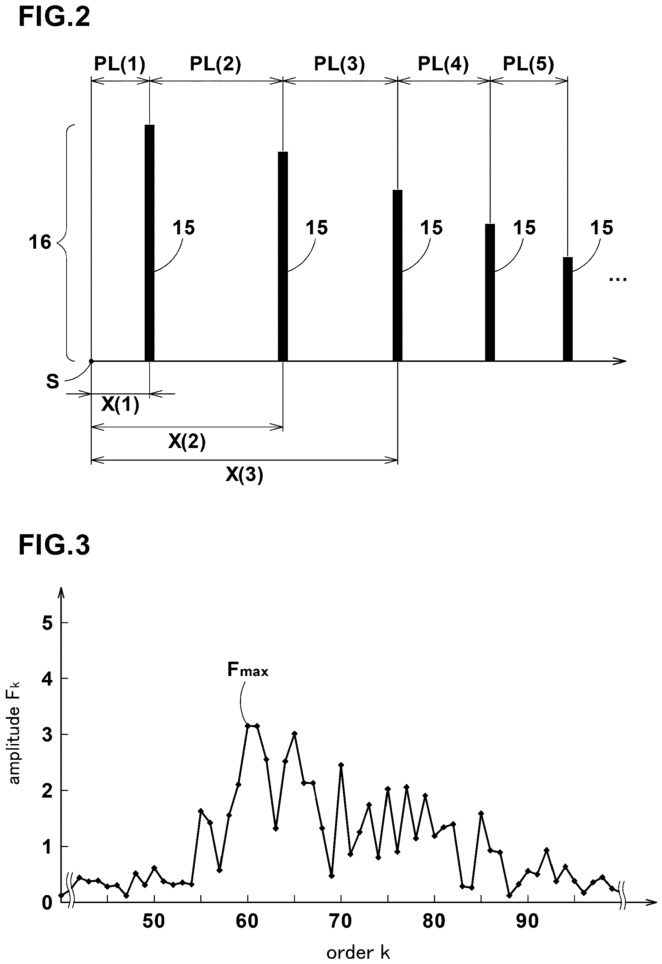

Fig. 2 shows a partial pulse train 16 of pulses 15, wherein the tread design units 4 are viewed as the pulses 15, and the pulses 15 are arranged at intervals proportional to the respective circumferential lengths L of the tread design units 4, in the same sequence as the tread design units 4, and further, the magnitudes of the pulses 15 are proportional to the respective circumferential lengths L of the tread design units 4.

In this manner, for each series R, the pulse train 16 is defined from all the tread design units 4 arranged over the entire circumference of the tire.

In Fig. 2, the vertical axis indicates magnitudes of the pulses 15, and the horizontal axis shows position or time at which each pulse 15 occurs.

The magnitude of each pulse 15 is defined by the circumferential length L of the corresponding tread design unit 4 expressed in term of a ratio to the median value of the above-said at least two different circumferential lengths of the tread design units 4.

The example shown in Figs. 1 and 2, the magnitudes of the five pulses 15 are defined by the circumferential length (LL, L, M, S, SS) of the corresponding tread design units 4 in term of the ratio to the median value of the five different circumferential lengths (LL, L, M, S, SS).

The intervals of the pulses 15 are defined according to the respective circumferential lengths L of the tread design units 4. More specifically, the intervals of the pulses 15 are respectively defined by the circumferential lengths L of the corresponding tread design units 4 expressed in term of a ratio to one of the above-said at least two different circumferential lengths of the tread design units 4 (in Fig. 1, a ratio to the circumferential length of a reference tread design unit 4S). Hereinafter, the above-said ratio expressing the circumferential length is referred to as the "circumferential length ratio PL". Such reference tread design unit 4S is preferably, that arranged at or close to an intermediate position when the tread design units 4 having the different circumferential lengths are arranged in the order of the circumferential lengths L.

According to the present invention, the maximum value Fmax of the amplitude F(k) (power spectral density) of the k-th order of frequencies obtained by Fourier transforming the pulse train 12 by the following formula (1) is limited to satisfy the following conditional expression (1'):

$$Fmax <= 4.52 - 0.0125\ N \qquad ---- (1'),$$

$$F(k) = \frac{10}{k^2}\sqrt{c_k^2 + d_k^2}$$

$$c_k = \sum_{j=1}^{N} p(j)\cdot\sin\left(\frac{2\pi k}{l}\cdot X(j)\right) \qquad --- (1),$$

$$d_k = \sum_{j=1}^{N} p(j)\cdot\cos\left(\frac{2\pi k}{l}\cdot X(j)\right)$$

wherein

N is the number of the pulses 15 in the pulse train 12, namely, the number of the tread design units 4 in a series R),
k is a natural number from 1 to 2N, expressing the order,
P(j) is the magnitude of the j-th pulse counted from a beginning of the pulse train 12,
j is a natural number from 1 to N,
x(j) is the position of the j-th pulse which is the sum of the above-said circumferential length ratio(s) PL(i) from the beginning S of the pulse train 12 to the j-th pulse (i=1 to j),
1 is the sum of the above-described circumferential length ratios PL(i) (i = 1 to N) of all the tread design units 4 in the series R.

For example, as shown in Fig. 2,

$$X(1) = PL(1)$$

$$X(2) = PL(1)+PL(2)$$

$$X(3) = PL(1)+PL(2)+PL(3)$$

$$X(4) = PL(1)+PL(2)+PL(3)+PL(4)$$

$$X(5) = PL(1)+PL(2)+PL(3)+PL(4)+PL(5)$$

namely,
x(j) = Sum of PL(1) to PL(j)

Fig. 3 is a graph as an example showing amplitudes F(k) and orders k of frequencies obtained by Fourier transforming a pulse train 12.
As with the magnitude of the pulse, the amplitude F(k) has a correlation with the magnitude of the noise energy obtained by frequency analyzing the pitch noise of the tire. Further, the order k has a correlation with the frequency of the noise energy.

In this embodiment, the amplitudes F(k) are used for predicting low order components of noise sound (low frequency noise energy).
In the formula (1), the order k ranges from 1 to 2N (two times the number N).

According to the present invention, the maximum value Fmax of the amplitude F(k) is limited to be not greater than 4.52-0.0125 N.

This upper limit value 4.52-0.0125 N was discovered by the inventors based on various experimental results. In the experiments conducted by the inventors, test tires different from each other in the number N of the tread design units 4 were prepared. Then, the test tires were mounted on an actual car, the pitch noise during running was measured for the sound pressure level in the car and also sensory evaluated by the test driver. On the other hand, for each test tire, a pulse train was produced and Fourier transformed with the formula (1), and then the maximum value Fmax was obtained from the amplitude F(k) of the k-th order (k = 1 to 2N) of frequencies. From the results of the test using the actual car and the maximum value Fmax, the inventors have found that, when the maximum value Fmax satisfies the condition (1'), the peaks of the amplitudes F(k) are averaged over a wide range of the order k and lowered, and thereby the pitch noise is reduced.

In the present invention, there is no need to change the upper limit for the maximum value Fmax depending on the number m of the above-said at least two different circumferential lengths of the tread design units 4 in a series R because the number m has small influence on the amplitude F(k). Thus, it is possible to take advantage of the variable pitches in order to reduce the pitch noise of the tire 1.

Further, through the experiments, the inventors have found that, when the peaks of the amplitudes F(k) are averaged over a wide range of the order k as described above, two sound of adjacent orders of the frequencies tends to produce beats. Namely, in two adjacent orders k and (k+1), if the amplitude F(k+1) is relatively large and comparable to the amplitude F(k), as the difference between the frequency of the order k and the frequency of the order k(k+1) is relatively small, there is a possibility that beat sound whose frequency corresponds to the above difference is generated. Based on such finding, the tire according to the present invention is configured as follows.

In every two of the adjacent orders k and k+1, their amplitudes F(k) and F(k+1) are both limited so as not to satisfy a condition that both of the amplitudes F(k) and F(k+1) have values of 2/3 or more times the maximum value Fmax so that relatively large amplitudes do not occur in the adjacent orders. Thus, the generation of beat sound can be prevented.

The beat sound does not become so offensive if one of the amplitudes F(k) and F(k+1) becomes more than 2/3 times the maximum value Fmax, and the other still keeps values not more than 2/3 times the maximum value Fmax. Therefore, according to the present invention, by limiting both amplitudes as above, the beat sound during running can be effectively suppressed.

Preferably, the amplitudes F(k) of every two of the adjacent orders (k) and (k+1) are limited so as to have values of not more than 2/3 times the above-said maximum value Fmax.

Further, according to the present invention, in order to reduce the maximum value Fmax and thereby effectively and reliably suppress the beat sound during running, the average of the magnitudes of the pulses 15 corresponding to the above-said at least two different circumferential lengths of the tread design units which magnitudes are expressed by the circumferential length L in term of the ratio as described above, is limited to 1.00.

And the amplitude F(1) of the 1st order is preferably limited to be not more than 0.6 in order to effectively reduce the beat sound. The amplitude F(1) of the 1st order has much effect on the noise energy generated during one revolution of the tire. In the case of a passenger car tire, for example, when running at 15 to 35 km/h, the 1st order has possibilities of generating beat sound of about 2 to 5 Hz which is uncomfortable for humans.

Through the experiments conducted by the present inventors, it was found out that such beat sound can be effectively suppressed by limiting the amplitude F(1) to 0.6 or less.

Further, it was found out that it is desirable, for further reducing the beat sound during running, to reduce the upper limit value of the amplitude F(1) as the number m of the above-said at least two different circumferential lengths of the tread design units 4 in a series R increases, although the beat sound during running can be effectively suppressed by limiting the amplitudes F(k) and F(k+1) to not more than 2/3 times the maximum value Fmax, and the amplitude F(1) to 0.6 or less.

It is desirable, for further reducing the beat sound during running, that the amplitude F(1) is limited to 0.5 or less.

Further, in order to further reduce the beat sound during running, it is preferred that the maximum value Fmax is set to be not more than 4.37 - 0.0125 N (condition 3), more preferably 4.22 - 0.0125 N (condition 4).

while detailed description has been made of preferable embodiments of the present invention, the present invention can be embodied in various forms without being limited to the illustrated embodiments.

## Comparison tests

Pneumatic tires of size 195/65R15 (rim size 15x6.5J) were prepared as test tires A, B, C, G and I as embodiments (EX) and D, E, F, H and J as references (REF).

The test tires had block patterns based on the pattern shown in Fig. 1, specifications of which are shown in Table 2.

In each of the test tires, the increasing rate of the circumferential lengths L of every two of the tread design units 4 arranged adjacently to each other in the tire circumferential direction was limited within the range of 0.08 to 0.25.

The sequence of the tread design units of each test tire is shown in Table 1.

For each test tire, a pulse train was produced as explained above, wherein the above-said average of the magnitude of the pulses was set to 1.00, and

the pulse train was Fourier transformed as explained above to obtain the amplitude F(1) and the maximum value Fmax of the amplitude F(k).

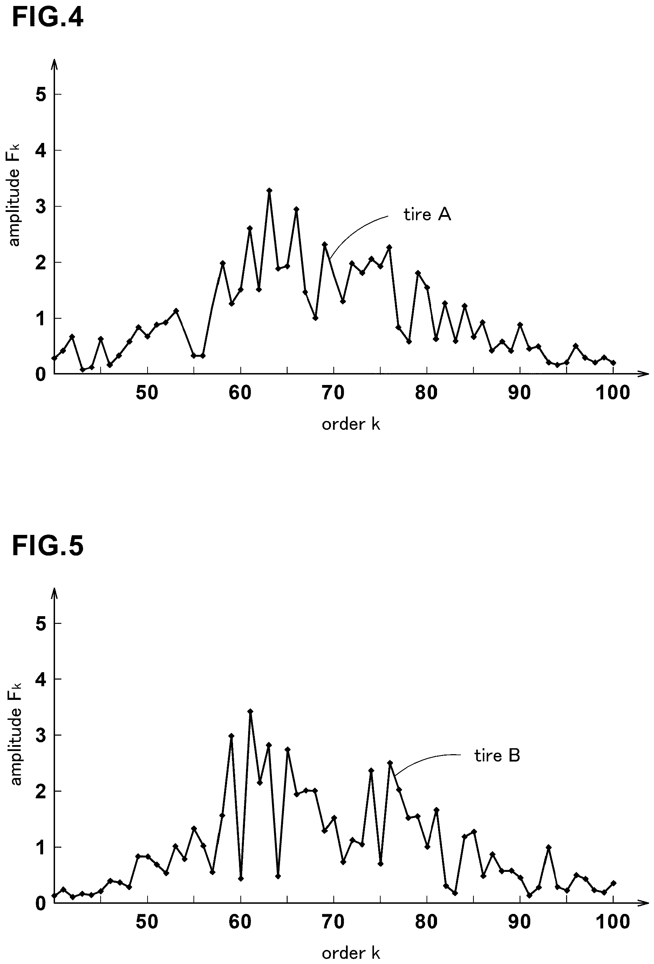

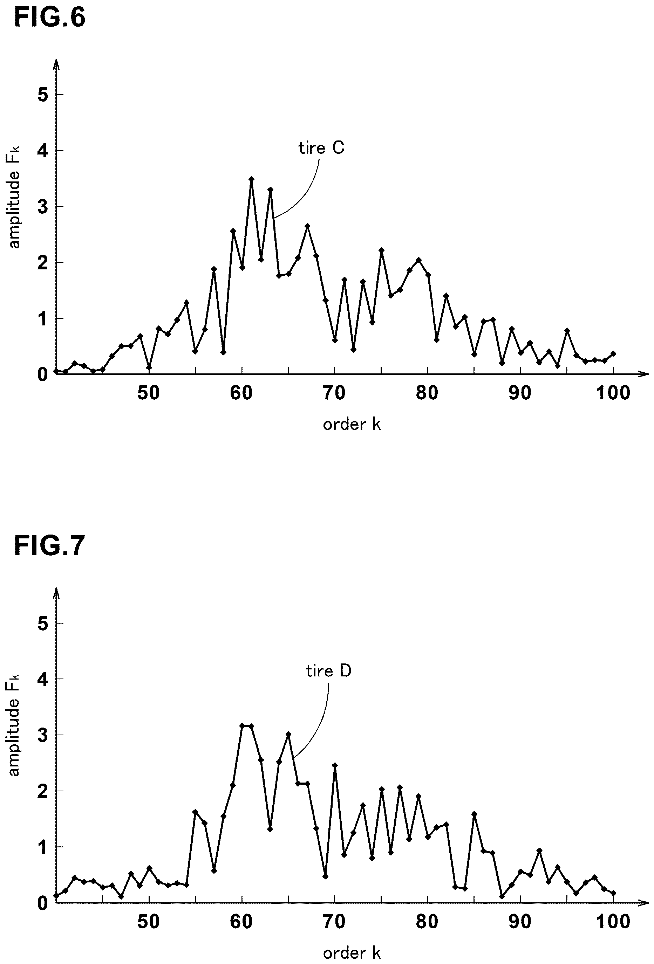

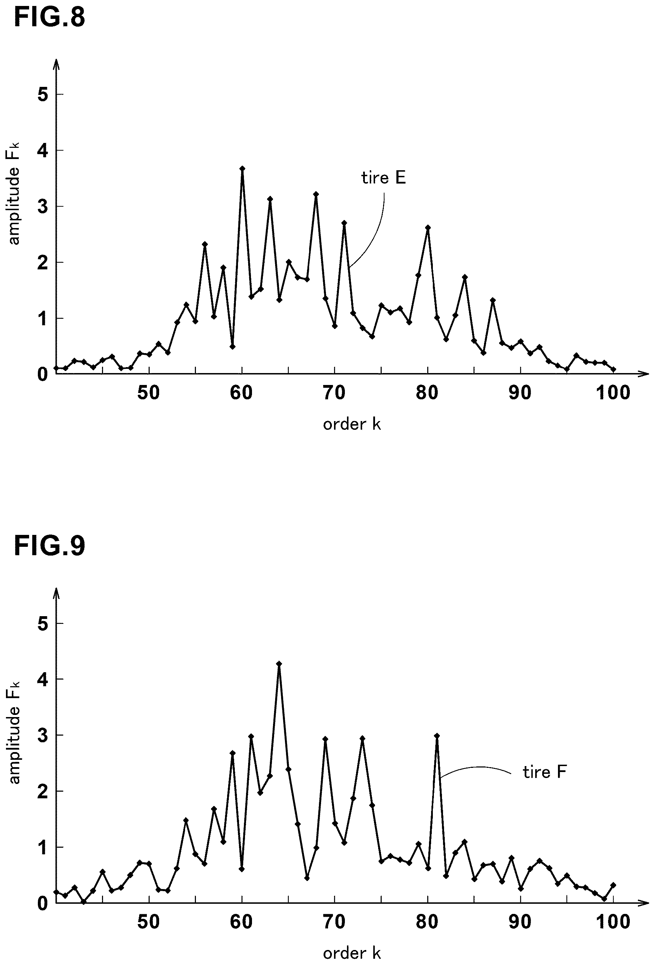

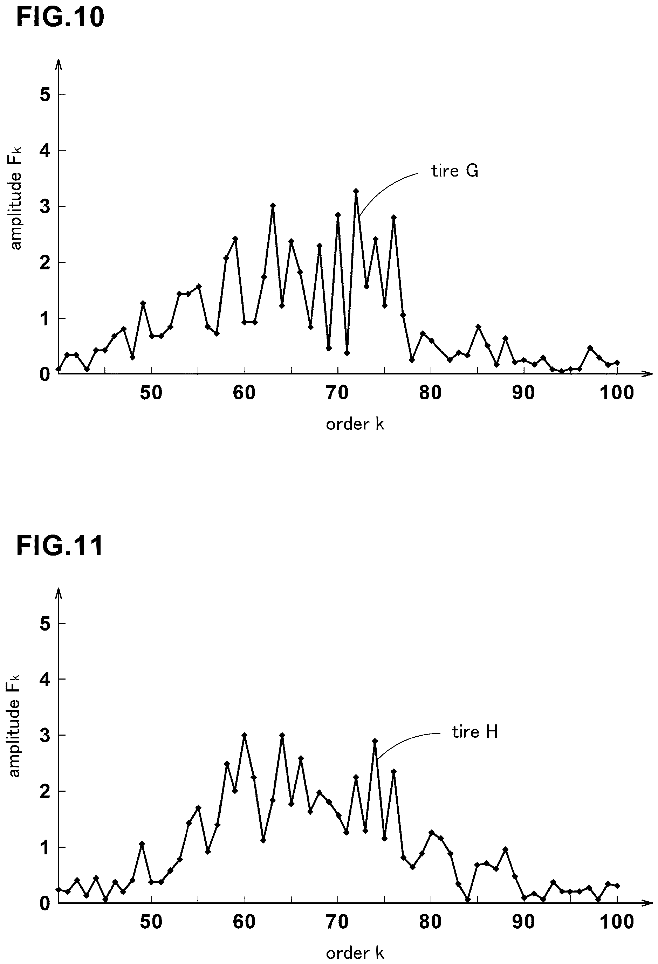

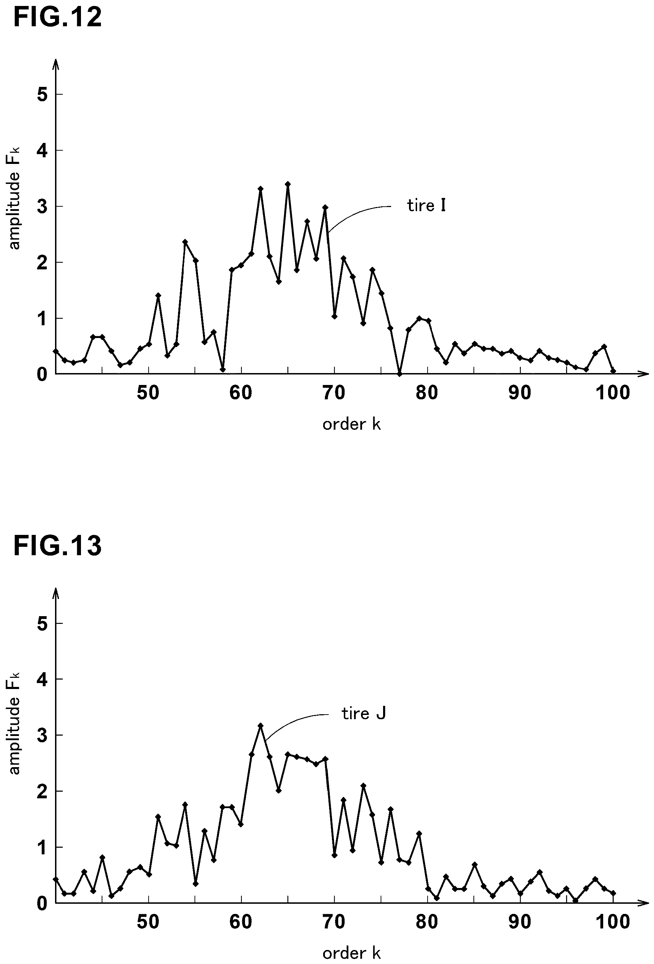

The obtained amplitude F(k) of the test tires A to J are shown in Figs. 4 to 13, respectively.

< Drum Noise Test >

using a tire test drum, each test tire mounted on a wheel rim of size 15x6.5 J and inflated to 230 kPa was run under a tire load of 4.20 kN, and the sound pressure was measured during coasting from 60 km/h to 20 km/h according to the test procedure specified by JASO.

The drum had a diameter of 3.0 m, and its circumferential surface was covered with a friction sheet (product name "Safety Walk" of 3M Japan Limited) to simulate a smooth road surface.

The microphone was fixed at a position, 1 meter from the tire equator in the tire axial direction and 15 cm away from the drum surface in the radial direction of the drum.

Based on data about the sound pressure during coasting at the speeds from 60 to 20 km/h,

a partial overall value of the sound power between a frequency corresponding to the order N+20 and a frequency corresponding to the order N-20 was calculated, and

a speed at which the calculated partial overall values showed a peak was obtained (speeds of 33-40 km/h were obtained). Then, the sound pressure at the obtained speed was obtained as the pitch noise.

Further, the data about the sound pressure at the speed of 34 km/h was wavelet transformed (resolution 16 Hz), and the sound pressure of the 1st order was obtained as the beat sound.

The results are indicated in Table 2 by an index based on the sound pressure of Ex1 (tire A) being 100. The smaller value is better.

< Interior Noise Test >

Using a 1800cc Japanese passenger car with the test tire mounted on the front right wheel and slick tires mounted on the left front wheel and both rear wheels,

the pitch noise, beat noise and overall noise including the pitch noise and the beat noise were each evaluated into ten ranks by the test driver during coasting from 60 km/h to 20 km/h on a smooth road surface. (tire pressure 230 kPa, tire load 4.20 kN) The results are shown in Table 2, wherein the higher rank number is better.

It was confirmed from the test result that, as compared to the reference tires, the tire according to the present invention were improved in the beat noise while reducing the pitch noise during running.

TABLE 1

| tire | N | m | sequence |
|---|---|---|---|
| tire A | 70 | 5 | M-LL-LL-L-M-M-S-S-SS-SS-SS-SS-SS-S-M-M-LL-LL-LL-L-M-M-SS-SS-SS-S-S-M-M-LL-L-M-M-S-SS-S-L-L-S-L-LL-L-S-S-S-SS-S-L-S-SS-S-M-M-L-LL-L-M-M-S-M-L-S-S-S-SS-S-M-L-S-L |
| tire B | 70 | 5 | LL-LL-L-M-S-SS-S-M-L-L-LL-L-M-S-SS-SS-S-S-M-L-LL-L-M-SS-SS-S-M-M-SS-S-M-M-L-L-LL-LL-L-M-SS-SS-S-M-S-SS-SS-S-L-L-L-M-LL-L-M-S-L-LL-L-M-SS-SS-SS-SS-SS-S-M-L-M-S-SS-M |
| tire C | 70 | 5 | M-M-L-L-LL-L-M-SS-S-SS-S-SS-S-M-M-L-LL-L-M-M-M-SS-SS-S-M-L-M-L-LL-LL-L-M-M-SS-SS-S-M-LL-LL-LL-LL-L-M-S-SS-S-L-L-LL-L-M-S-SS-S-L-LL-LL-LL-LL-L-M-SS-S-M-SS-SS-SS-S-L |
| tire D | 70 | 5 | M-L-LL-L-M-S-SS-SS-S-M-L-M-M-S-S-M-L-L-LL-LL-LL-LL-LL-L-M-M-SS-SS-SS-SS-S-M-M-L-LL-LL-LL-L-LL-L-M-M-M-S-M-SS-SS-S-M-L-LL-LL-LL-L-M-SS-SS-S-M-M-L-LL-L-M-M-SS-SS-SS-SS-S-L |
| tire E | 70 | 5 | M-L-L-L-L-L-L-M-M-S-S-S-S-SS-SS-SS-SS-SS-S-S-M-L-LL-LL-LL-LL-LL-L-L-M-S-SS-SS-SS-SS-S-S-M-M-M-L-M-S-M-M-L-L-M-S-SS-SS-S-M-L-LL-LL-LL-L-M-S-SS-SS-SS-SS-SS-S-S-M-M-M |
| tire F | 70 | 5 | SS-S-M-LL-LL-LL-LL-L-L-M-S-SS-S-M-L-LL-L-S-SS-SS-S-M-L-LL-L-S-SS-S-L-S-M-M-L-L-LL-LL-LL-LL-LL-L-M-M-SS-SS-SS-S-M-L-LL-L-M-M-SS-SS-S-M-LL-LL-L-S-L-LL-L-M-S-M-M-L-L-S |
| tire G | 68 | 3 | L-L-M-S-M-S-S-S-S-M-S-S-M-L-M-S-S-S-M-L-L-M-S-S-S-S-M-S-S-S-S-M-M-M-L-M-S-M-L-L-M-S-M-S-M-M-S-S-S-S-M-M-L-L-M-M-S-S-S-S-S-M-S-S-M-L-L |
| tire H | 68 | 3 | L-L-M-L-M-S-S-M-M-S-S-S-S-M-L-L-L-M-L-M-M-S-M-M-L-M-L-L-M-S-M-M-S-S-S-M-L-L-L-M-S-M-M-S-S-S-S-S-M-L-L-L-M-S-S-M-L-M-S-M-S-S-M-L-L-L |
| tire I | 66 | 2 | S-S-S-S-S-S-L-L-L-L-S-S-L-L-L-L-L-S-S-S-L-S-S-S-L-L-L-L-L-L-S-S-S-L-S-S-L-L-S-S-S-S-S-S-L-L-L-S-L-S-S-S-S-S-S-L-L-S-S-L-L-L-L-L-S |
| tire J | 66 | 2 | L-L-L-S-S-S-S-S-S-L-S-L-L-S-S-L-L-L-S-S-S-L-L-S-S-S-S-S-S-S-S-L-L-L-L-S-S-S-S-S-L-L-L-L-L-S-L-L-L-S-S-S-S-S-S-L-S-S-L-L-L-L-L-L-S-S |

EP 3 492 281 B1

Table 2

| Tire | EX 1 Tire A | EX 2 Tire B | EX 3 Tire C | REF 1 Tire D | REF 2 Tire E | REF 3 Tire F | EX 4 Tire G | REF 4 Tire H | EX 5 Tire I | REF 5 Tire J |
|---|---|---|---|---|---|---|---|---|---|---|
| N | 70 | 70 | 70 | 70 | 70 | 70 | 68 | 68 | 66 | 66 |
| m | 5 | 5 | 5 | 5 | 5 | 5 | 3 | 3 | 2 | 2 |
| number of position *1 | 0 | 0 | 0 | 5 | 0 | 0 | 0 | 3 | 0 | 6 |
| Fmax | 3.29 | 3.42 | 3.49 | 3.16 | 3.68 | 4.28 | 3.24 | 2.98 | 3.39 | 3.16 |
| Value of 4.52-0.0125N | 3.65 | 3.65 | 3.65 | 3.65 | 3.65 | 3.65 | 3.67 | 3.67 | 3.70 | 3.70 |
| Value of 4.37-0.0125N | 3.50 | 3.50 | 3.50 | 3.50 | 3.50 | 3.50 | 3.52 | 3.52 | 3.55 | 3.55 |
| Value of 4.22-0.0125N | 3.35 | 3.35 | 3.35 | 3.35 | 3.35 | 3.35 | 3.37 | 3.37 | 3.40 | 3.40 |
| F(1) | 0.04 | 0.04 | 0.61 | 0.52 | 0.17 | 0.07 | 0.19 | 0.16 | 0.41 | 0.31 |
| upper limit for F(1) | 0.6 | 0.6 | 0.6 | 0.6 | 0.6 | 0.6 | 0.6 | 0.6 | 0.6 | 0.6 |
| preferable upper limit for F(1) | 0.5 | 0.5 | 0.5 | 0.5 | 0.5 | 0.5 | 0.5 | 0.5 | 0.5 | 0.5 |
| Drum Noise Test | | | | | | | | | | |
| pitch noise | 100 | 103 | 104 | 98 | 110 | 130 | 104 | 100 | 105 | 100 |
| beat noise | 100 | 105 | 104 | 183 | 105 | 105 | 104 | 152 | 103 | 207 |
| Interior Noise Test | | | | | | | | | | |
| pitch noise | 5.9 | 5.7 | 5.6 | 6.0 | 5.1 | 4.2 | 5.5 | 5.8 | 5.6 | 6.0 |
| beat noise | 8.0 | 7.9 | 7.7 | 5.8 | 7.8 | 7.7 | 7.6 | 6.3 | 7.8 | 5.0 |
| pitch + beat noise | 7.0 | 6.8 | 6.7 | 5.9 | 6.5 | 6.0 | 6.6 | 6.1 | 6.7 | 5.5 |

*1) the number of position(s) in a series of the tread design units where the limitation to 2/3 times Fmax was not satisfied.

**Claims**

1.    A tire (1) comprising:

a tread portion (2) provided with a tread pattern (3),
the tread pattern (3) comprising a series of a number N of tread design units (4) arranged repeatedly and circumferentially of the tire (1) in a sequence,
the tread design units (4) having at least two different circumferential lengths (L), **characterised in that**, when viewing the tread design units (4) as the number N of pulses (15) having magnitudes proportional to the respective circumferential lengths (L) of the tread design units (4), and
defining a pulse train (16) such that the number N of the pulses (15) are arranged in the same sequence as the tread design units (4) at intervals which are defined by the circumferential lengths (L) of the corresponding tread design units (4) expressed in term of a ratio to one of said at least two different circumferential lengths (L), and further expressing magnitudes of the pulses (15) by the respective circumferential lengths (L) in term of a ratio to the median value of said at least two different circumferential lengths (L),
the average of the magnitudes of the pulses (15) corresponding to said at least two different circumferential lengths (L) is limited to 1.00,
a maximum value Fmax of amplitude F(k) of k-th order, k = 1 to 2N, of frequencies obtained by Fourier transforming said pulse train (16) with the following formula (1) is limited to satisfy the following condition: Fmax <= 4.52 - 0.0125 N,

$$F(k) = \frac{10}{k^2}\sqrt{c_k^2 + d_k^2}$$

$$c_k = \sum_{j=1}^{N} p(j)\cdot\sin\left(\frac{2\pi k}{l}\cdot X(j)\right) \qquad \text{---} \quad (1),$$

$$d_k = \sum_{j=1}^{N} p(j)\cdot\cos\left(\frac{2\pi k}{l}\cdot X(j)\right)$$

wherein

P(j) is the magnitude of the j-th pulse, j = 1 to N, counted from a beginning of the pulse train (16),
x(j) is the position of the j-th pulse from the beginning of the pulse train (16), and
1 is a circumference length parameter equal to the sum of said ratios expressing the circumferential lengths (L) of all the tread design units (4) in a series, and
the amplitudes F(k) of every two of the adjacent orders (k) and (k+1) are limited so as not to satisfy a condition that both of the amplitudes F(k) and F(k+1) have values of 2/3 or more times said maximum value Fmax.

2. The tire (1) according to claim 1, wherein the amplitude F(1) of the 1st order is not more than 0.6.

3. The tire (1) according to claim 1, wherein the amplitude F(1) of the 1st order is not more than 0.5.

4. The tire (1) according to claim 1, 2 or 3, wherein the number N of the tread design units (4) in a series is not less than 30 and not more than 90.

5. The tire (1) according to claim 1, 2, 3 or 4, wherein the increasing rate of the circumferential lengths (L) of every two of the tread design units (4) arranged adjacently to each other in the tire circumferential direction is a range from 0.08 to 0.25.

6. The tire (1) according to any one of claims 1 to 5, wherein the maximum value Fmax is not more than 4.37 - 0.0125 N.

7. The tire (1) according to any one of claims 1 to 5, wherein the maximum value Fmax is not more than 4.22 - 0.0125 N.

**Patentansprüche**

1. Reifen (1), umfassend:

einen Laufflächenabschnitt (2), der mit einem Laufflächenprofil (3) versehen ist,
wobei das Laufflächenprofil (3) eine Reihe einer Anzahl N von Laufflächen-Designeinheiten (4) umfasst, die wiederholt und in Umfangsrichtung des Reifens (1) in einer Reihenfolge angeordnet sind,
wobei die Laufflächen-Designeinheiten (4) mindestens zwei verschiedenen Umfangslängen (L) aufweisen,
**dadurch gekennzeichnet, dass**,
wenn man die Laufflächen-Designeinheiten (4) als die Anzahl N von Impulsen (15) betrachtet, deren Größen proportional zu den jeweiligen Umfangslängen (L) der Laufflächen-Designeinheiten (4) sind, und
eine Impulsfolge (16) so definiert, dass die Anzahl N der Impulse (15) in der gleichen Reihenfolge wie die Laufflächen-Designeinheiten (4) in Intervallen angeordnet sind, die durch die Umfangslängen (L) der entsprechenden Laufflächen-Designeinheiten (4) definiert sind, ausgedrückt als ein Verhältnis zu einer der mindestens zwei verschiedenen Umfangslängen (L),
und ferner Größen der Impulse (15) durch die jeweiligen Umfangslängen (L) als ein Verhältnis zu dem Medianwert der mindestens zwei verschiedenen Umfangslängen (L) ausdrückt,
der Mittelwert der Größen der Impulse (15), die den mindestens zwei verschiedenen Umfangslängen (L) entsprechen, auf 1,00 begrenzt ist,
ein Maximalwert Fmax der Amplitude F(k) der k-ten Ordnung, k = 1 bis 2N, von Frequenzen, die durch Fourier-Transformation der Impulsfolge (16) mit der folgenden Formel (1) erhalten werden, begrenzt ist, um die folgende Bedingung zu erfüllen: Fmax <= 4,52 - 0,0125 N,

$$F(k) = \frac{10}{k^2} \sqrt{c_k^2 + d_k^2}$$

$$c_k = \sum_{j=1}^{N} p(j) \cdot \sin\left(\frac{2\pi k}{l} \cdot X(j)\right) \qquad\qquad \text{--- (1),}$$

$$d_k = \sum_{j=1}^{N} p(j) \cdot \cos\left(\frac{2\pi k}{l} \cdot X(j)\right)$$

wobei

P(j) die Größe des j-ten Impulses ist, j = 1 bis N, gezählt von einem Beginn der Impulsfolge (16),
X(j) die Position des j-ten Impulses von dem Beginn der Impulsfolge (16) ist, und
*l* ein Umfangslängenparameter ist, der gleich der Summe dieser Verhältnisse ist und der die Umfangslängen (L) aller Laufflächen-Designeinheiten (4) in einer Reihe ausdrückt, und
die Amplituden F(k) von jeweils zwei der benachbarten Ordnungen (k) und (k+1) so begrenzt sind, dass sie die Bedingung nicht erfüllen, dass beide Amplituden F(k) und F(k+1) Werte von 2/3 oder mehr des Maximalwertes Fmax aufweisen.

2. Reifen (1) nach Anspruch 1, wobei die Amplitude F(1) der 1. Ordnung nicht mehr als 0,6 beträgt.

3. Reifen (1) nach Anspruch 1, wobei die Amplitude F(1) der 1. Ordnung nicht mehr als 0,5 beträgt.

4. Reifen (1) nach Anspruch 1, 2 oder 3, wobei die Anzahl N der Laufflächen-Designeinheiten (4) in einer Reihe nicht weniger als 30 und nicht mehr als 90 beträgt.

5. Reifen (1) nach Anspruch 1, 2, 3 oder 4, wobei die Anstiegsrate der Umfangslängen (L) von jeweils zwei der Laufflächen-Designeinheiten (4), die in der Reifenumfangsrichtung benachbart zueinander angeordnet sind, in einem Bereich von 0,08 bis 0,25 liegt.

6. Reifen (1) nach einem der Ansprüche 1 bis 5, wobei der Maximalwert Fmax nicht mehr als 4,37 - 0,0125 N beträgt.

7. Reifen (1) nach einem der Ansprüche 1 bis 5, wobei der Maximalwert Fmax nicht mehr als 4,22 - 0,0125 N beträgt.

**Revendications**

1. Pneumatique (1) comprenant :

une portion formant bande de roulement (2) dotée d'un motif de roulement (3),
le motif de roulement (3) comprenant une série d'un nombre N d'unités de dessin de roulement (4) agencées de façon répétée et circonférentiellement par rapport au pneumatique (1) dans une séquence,
les unités de dessin de roulement (4) ayant au moins deux longueurs circonférentielles différentes (L),
**caractérisé en ce que**
lorsqu'on considère les unités de dessin de roulement (4) sous forme du nombre N d'impulsions (15) ayant des amplitudes proportionnelles aux longueurs circonférentielles respectives (L) des unités de dessin de roulement (4), et
qu'on définit un train d'impulsions (16) tel que le nombre N d'impulsions (15) sont agencées dans la même séquence que les unités de dessin de roulement (4) à des intervalles qui sont définis par les longueurs circonférentielles (L) des unités de dessin de roulement (4) correspondantes exprimées sous la forme d'un rapport à l'une desdites au moins deux longueurs circonférentielles différentes (L), et
en outre qu'on exprime les amplitudes des impulsions (15) par les longueurs circonférentielles respectives (L) sous la forme d'un rapport à la valeur médiane desdites au moins deux longueurs circonférentielles différentes (L),
la moyenne des amplitudes des impulsions (15) correspondant auxdites au moins deux longueurs circonférentielles différentes (L) est limitée à 1,00,
une valeur maximum Fmax de l'amplitude F(k) d'une fréquence d'ordre k (k = 1 à 2N) parmi les fréquences obtenues par transformation de Fourier dudit train d'impulsions (16) avec la formule suivante (1) est limitée pour satisfaire la condition suivante : Fmax <= 4,52 - 0,0125 N,

$$F(k) = \frac{10}{k^2}\sqrt{c_k^2 + d_k^2}$$

$$c_k = \sum_{j=1}^{N} p(j) \cdot \sin\left(\frac{2\pi k}{l} \cdot X(j)\right) \qquad --- \ (1),$$

$$d_k = \sum_{j=1}^{N} p(j) \cdot \cos\left(\frac{2\pi k}{l} \cdot X(j)\right)$$

dans laquelle

P(j) est l'amplitude de la j-ième impulsion (j = 1 à N), comptée depuis un commencement du train d'impulsions (16),
x(j) est la position de la j-ième impulsion depuis le commencement du train d'impulsions (16), et
$l$ est un paramètre de longueur circonférentielle égal à la somme desdits rapports exprimant les longueurs circonférentielles (L) de toutes les unités de dessin de roulement (4) dans une série, et
les amplitudes F(k) d'un ordre sur deux parmi les ordres adjacents (k) et (k+1) sont limitées de manière à ne pas satisfaire une condition telle que les deux amplitudes F(k) et F(k+1) ont des valeurs de 2/3 fois ou plus ladite valeur maximum Fmax.

2. Pneumatique (1) selon la revendication 1, dans lequel l'amplitude F(1) du premier ordre n'est pas supérieure à 0,6.

3. Pneumatique (1) selon la revendication 1, dans lequel l'amplitude F(1) du premier ordre n'est pas supérieure à 0,5.

4. Pneumatique (1) selon la revendication 1, 2 3, dans lequel le nombre N des unités de dessin de roulement (4) dans une série n'est pas inférieur à 30 et n'est pas supérieur à 90.

5. Pneumatique (1) selon la revendication 1, 2, 3 ou 4, dans lequel le taux d'augmentation des longueurs circonférentielles (L) d'une unité sur deux parmi les unités de dessin de roulement (4) agencées de façon adjacente les unes aux autres dans la direction circonférentielle du pneumatique est dans une plage de 0,08 à 0,25.

6. Pneumatique (1) selon l'une quelconque des revendications 1 à 5, dans lequel la valeur maximum Fmax n'est pas supérieure à 4,37-0,0125 N.

7. Pneumatique (1) selon l'une quelconque des revendications 1 à 5, dans lequel la valeur maximum Fmax n'est pas supérieure à 4,22-0,0125 N.

# FIG.1

## FIG.2

## FIG.3

# FIG.4

# FIG.5

# FIG.6

# FIG.7

## FIG.8

## FIG.9

**FIG.10**

tire G

amplitude $F_k$ / order k

**FIG.11**

tire H

amplitude $F_k$ / order k

# FIG.12

tire I

amplitude $F_k$

order k

# FIG.13

tire J

amplitude $F_k$

order k

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000177320 A